# EUROPEAN PATENT APPLICATION

(11) **EP 4 644 102 A1**
(43) Date of publication of application: **05.11.2025**
(21) Application number: 25159986.6
(22) Date of filing: 25.02.2025
(51) Int. Cl.: B29C 70/54, B29C 70/46, B29C 70/30, B29C 70/56, B29D 99/00

(54) **PUNCH FORMING A COMPOSITE CHARGE**

(30) Priority: 29.04.2024 US 202418649638
(71) Applicant: The Boeing Company, Arlington, VA 22202 (US)
(72) Inventor: Ciccu, Marco Tullio B., Arlington, 22202 (US); Lee, Michael Alan, Arlington, 22202 (US); Zmeu, Sandra Louise, Arlington, 22202 (US); Lucas, David William, Arlington, 22202 (US); Plummer, Steven Joseph, Arlington, 22202 (US)
(74) Representative: Witte, Weller & Partner Patentanwälte mbB

(57) **Abstract**

Methods of punch forming a composite charge are presented. A forming tool is placed in contact with a composite charge. A plurality of actuators connected to the forming tool is simultaneously activated to drive the forming tool towards the composite charge. The plurality of actuators is driven at a plurality of rates to generate a variable cross-section in the composite charge. The plurality of actuators is simultaneously stopped.

## Description

### BACKGROUND INFORMATION

### 1. Field:

The present disclosure relates generally to composite manufacturing and more specifically to a method of forming a composite structure with a variable cross-section.

### 2. Background:

Historically, composite stringers for commercial aircraft applications have been designed with a constant cross section along the spanwise direction. Constant cross-section composite stringers can be created using traditional methods of punch forming.

Designs for future aircraft could benefit from tapered stringer cross-sections. Tapered stringer cross-sections could at least one of reduce the weight of the stringer or improve performance. However, traditional methods of composite stringer punch forming do not account for a taper in a cross-section.

Therefore, it would be desirable to have a method and apparatus that takes into account at least some of the issues discussed above as well as other possible issues. For example, it would be desirable to have a punch forming method that can produce a tapered cross-section.

### SUMMARY

An embodiment of the present disclosure provides a method of punch forming a composite charge. A forming tool is placed in contact with a composite charge. A plurality of actuators connected to the forming tool is simultaneously activated to drive the forming tool towards the composite charge. The plurality of actuators is driven at a plurality of rates to generate a variable cross-section in the composite charge. The plurality of actuators is simultaneously stopped.

An embodiment of the present disclosure provides a punch forming system for a variable cross-section. The punch forming system comprises a charge support, a forming tool, and a plurality of actuators. The charge support is configured to support a composite charge during forming of the composite charge, the forming tool positioned over the charge support, the forming tool comprises a forming surface and a backside, and the plurality of actuators is connected to the backside of the forming tool and configured to operate at a plurality of rates to form a composite charge between the forming surface and the charge support.

Another embodiment of the present disclosure provides a method of punch forming a composite charge. A composite charge is placed onto a charge support. A forming tool is driven against the composite charge towards the charge support using a plurality of actuators at a plurality of rates to generate a variable cross-section in the composite charge. The plurality of actuators is simultaneously stopped.

Yet another embodiment of the present disclosure provides a method of punch forming a composite charge. A forming tool is placed in contact with a composite charge. A plurality of actuators connected to the forming tool is simultaneously activated to drive the forming tool towards the composite charge. The plurality of actuators is driven a plurality of stroke lengths to generate a variable cross-section in the composite charge. The plurality of actuators is simultaneously stopped.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a manufacturing environment in accordance with an illustrative embodiment;
**Figure 3** is an illustration of an isometric view of a longitudinal component that can be manufactured using punch forming in accordance with an illustrative embodiment;
**Figure 4** is an illustration of a side view of a schematic of a forming tool and plurality of actuators for punch forming in accordance with an illustrative embodiment;
**Figure 5** is an illustration of a side view of a schematic of a forming tool and plurality of actuators for punch forming in accordance with an illustrative embodiment;
**Figure 6** is an illustration of a side view of a schematic of a forming tool relative to a charge support prior to and following punch forming in accordance with an illustrative embodiment;
**Figure 7** is an illustration of a front view of a schematic of a forming tool and a charge support prior to punch forming in accordance with an illustrative embodiment;
**Figures 8A** and **8B** are a flowchart of a method of punch forming a composite charge in accordance with an illustrative embodiment;
**Figure 9** is a flowchart of a method of punch forming a composite charge in accordance with an illustrative embodiment;
**Figure 10** is a flowchart of a method of punch forming a composite charge in accordance with an illustrative embodiment;
**Figure 11** is an illustration of an aircraft manufacturing and service method in a form of a block diagram in accordance with an illustrative embodiment; and
**Figure 12** is an illustration of an aircraft in a form of a block diagram in which an illustrative embodiment may be implemented.

### DETAILED DESCRIPTION

The illustrative examples recognize and take into account several considerations. The illustrative embodiments recognize and take into account that volumetric changes of a stringer cross-section can produce material excess along the length of the part and can induce wrinkles and other inconsistencies. The illustrative examples recognize and take into account the excess material along the tapered geometry. The illustrative examples provide a novel approach to account for material excess to improve part producibility.

The illustrative examples recognize and take into account that traditional methods of punch forming for stringers have a constant speed of forming for a constant cross section. The illustrative examples recognize and take into account that traditional methods of punch forming have a constant speed such that the material starts and ends the forming cycle simultaneously. The illustrative examples recognize and take into account that the constant speed provides a uniform constraint in the laminate to manage part quality.

To create a tapered cross section, the illustrative examples provide a forming routine that compensates for the geometric change along the length. The illustrative examples compensate for the geometric change by forming at variable speeds so that the part starts forming and finishes forming concurrently. The illustrative examples provide the same uniform constraint condition as a constant cross section would throughout the forming cycle.

The illustrative examples form the material at a variable rate such that the material is constrained throughout the entirety of the forming process. The illustrative examples provide equipment to operate in a manner that provides variable rates. The illustrative examples provide equipment with motion control and programming capability. The illustrative examples provide equipment with variable-rate forming capability. In the illustrative examples, each actuator longitudinally placed along the forming die is able to punch a cross section size different from a neighboring cross section in the same time span as the neighboring cross section. The illustrative examples utilize tapered forming dies.

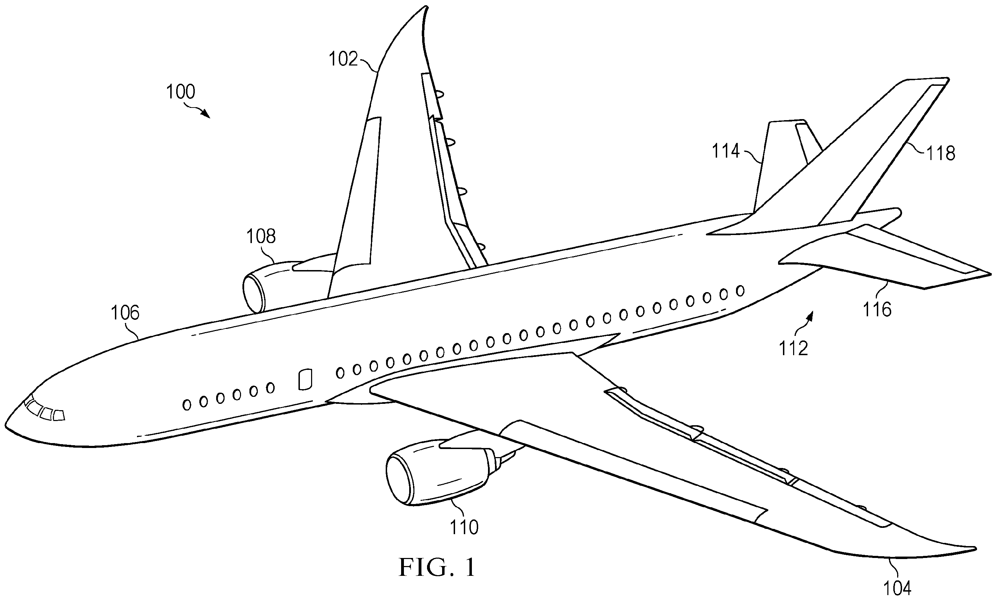

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have composite parts manufactured using at least one of the punch forming methods and punch forming system of the illustrative examples. A composite part of at least one of wing **102,** wing **104,** or body **106** can be formed using at least one of the punch forming methods and punch forming system of the illustrative examples. For example, a stringer of at least one of wing **102,** wing **104,** or body **106** can be formed using at least one of the punch forming methods and punch forming system of the illustrative examples.

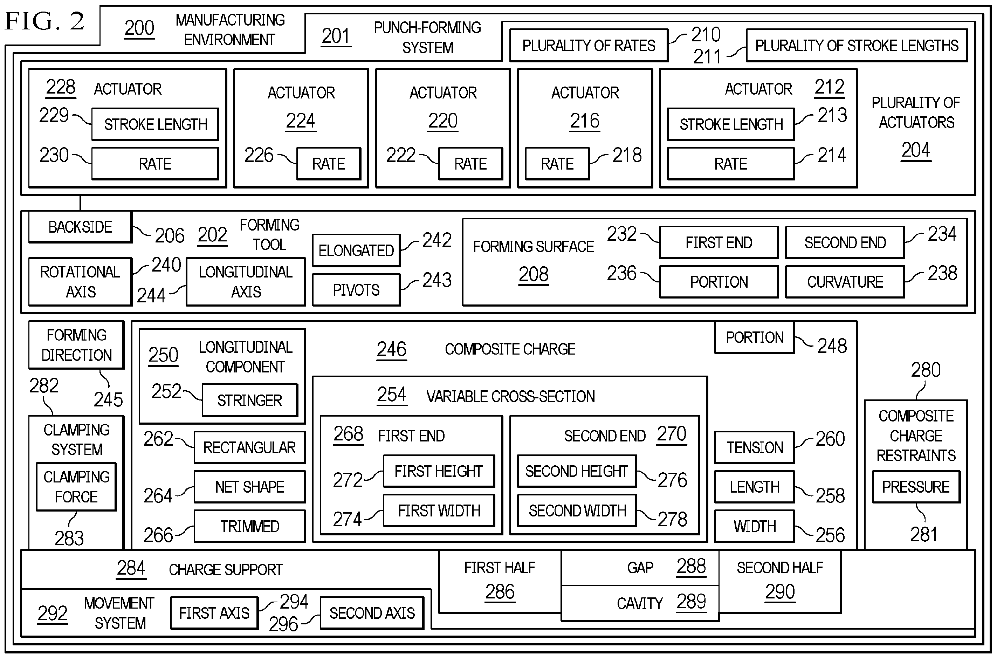

Turning now to **Figure 2****,** an illustration of a block diagram of a manufacturing environment is depicted in accordance with an illustrative embodiment. Punch forming system **201** can be used to punch form composite charge **246** to form variable cross-section **254.**

Punch forming system **201** for a variable cross-section **254** comprises charge support **284,** forming tool **202,** and plurality of actuators **204.** Charge support **284** is configured to support composite charge **246** during forming of composite charge **246.** Forming tool **202** is positioned over charge support **284.** In some illustrative examples, forming tool **202** can be referred to as elongated **242.** Forming tool **202** comprises forming surface **208** and backside **206.** Plurality of actuators **204** is connected to backside **206** of forming tool **202** and configured to operate at plurality of rates **210** to form composite charge **246** between forming surface **208** and charge support **284.** During forming, plurality of actuators **204** move at plurality of rates **210** so that forming completes at same time.

Plurality of actuators **204** are spread across backside **206** of forming tool **202** along longitudinal axis **244** of forming tool **202.** Longitudinal axis **244** runs from first end **232** to second end **234** of forming tool **202.** In some illustrative examples, plurality of actuators **204** are arranged in a line on backside **206** of forming tool **202.** Plurality of actuators **204** is arranged such that each actuator of plurality of actuators **204** moves a respective portion of forming tool **202.** Plurality of actuators **204** comprises any desirable quantity of actuators. In this illustrative example, plurality of actuators **204** comprises actuator **212,** actuator **216,** actuator **220,** actuator **224,** and actuator **228.**

As depicted, actuator **228** is closest to first end **232** of forming tool **202.** As depicted, actuator **212** is closest to second end **234** of forming tool **202.** Actuator **224,** actuator **220,** and actuator **216** extend between actuator **228** and actuator **212.** Each actuator of plurality of actuators **204** has a respective rate of plurality of rates **210.** Actuator **212** operates at rate **214,** actuator **216** operates at rate **218,** actuator **220** operates at rate **222,** actuator **224** operates at rate **226,** and actuator **228** operates at rate **230.** Each of plurality of rates **210** for plurality of actuators **204** is independently set based on variable cross-section **254** to be formed into composite charge **246.**

Rate **230** is different than rate **214.** In some illustrative examples, rate **230** is greater than rate **214.** In some illustrative examples, rate **214** is greater than rate **230.** When a cross-section of forming tool **202** at first end **232** is greater than a cross-section at second end **234,** rate **230** is greater than rate **214.** In some illustrative examples, actuators between actuator **228** and actuator **212** have a range of rates. In some illustrative examples, rate **226,** rate **222,** and rate **218** are in a range between rate **214** and rate **230.**

To form composite charge **246,** plurality of actuators **204** connected to forming tool **202** is simultaneously activated to drive forming tool **202** towards composite charge **246.** Plurality of actuators **204** is driven at plurality of rates **210** to generate variable cross-section **254** in composite charge **246.** Plurality of actuators **204** is simultaneously stopped. Plurality of rates **210** is influenced by curvature **238** of forming surface **208.** Curvature **238** is configured to generate variable cross-section **254** in composite charge **246.**

Plurality of actuators **204** is distributed along longitudinal axis **244** of forming tool **202.** Driving plurality of actuators **204** at plurality of rates **210** to generate variable cross-section **254** in composite charge **246** comprises driving plurality of actuators **204** plurality of stroke lengths **211** along longitudinal axis **244** to generate variable cross-section **254** in composite charge **246.** Plurality of actuators **204** is driven plurality of stroke lengths **211** to generate variable cross-section **254** in composite charge **246.** Due to plurality of stroke lengths **211,** one end of forming surface **208** moves farther than the other of forming surface **208.**

Driving plurality of actuators **204** at plurality of stroke lengths **211** forms composite charge **246** into a shape having first height **272** at first end **268** and second height **276** at second end **270.** Second height **276** is different than first height **272.** When second height **276** is greater than first height **272,** stroke length **213** of actuator **212** is greater than stroke length **229** of actuator **228.** When second height **276** is greater than first height **272,** second end **234** is moved farther than first end **232.**

In some illustrative examples, plurality of actuators **204** can include actuators of different lengths. In these illustrative examples, plurality of actuators **204** can be completely retracted prior to beginning punch forming.

In other illustrative examples, plurality of actuators **204** can include one length of actuator, wherein each actuator is extended a different distance prior to forming composite charge **246.** In these illustrative examples, plurality of actuators **204** is initially extended a plurality of different lengths. In these illustrative examples, some actuators of plurality of actuators **204** are partially extended prior to beginning punch forming.

To punch form composite charge **246,** forming tool **202** is placed in contact with composite charge **246.** In some illustrative examples, placing forming tool **202** in contact with composite charge **246** comprises placing forming tool **202** in contact with an entire length, length **258,** of composite charge **246.** In some illustrative examples, forming tool **202** is in contact with a centerline of composite charge **246.** In some illustrative examples, forming tool **202** is in contact with a region of composite charge **246** that will form a cap region of stringer **252.**

Plurality of actuators **204** connected to forming tool **202** is simultaneously activated to drive forming tool **202** in forming direction **245** towards composite charge **246.** Plurality of actuators **204** is driven at plurality of rates **210** to generate variable cross-section **254** in composite charge **246.** Plurality of actuators **204** is simultaneously stopped.

In some illustrative examples, driving plurality of actuators **204** at plurality of rates **210** to generate variable cross-section **254** in composite charge **246** comprises forming composite charge **246** into a shape having first height **272** at first end **268** and second height **276** at second end **270.** Second height **276** is different than first height **272.** When second height **276** is greater than first height **272,** rate **214** of actuator **212** is greater than rate **230** of actuator **228.** When second height **276** is greater than first height **272,** second end **234** is moved faster than first end **232.**

In some illustrative examples, driving plurality of actuators **204** at plurality of rates **210** to generate variable cross-section **254** in composite charge **246** comprises forming composite charge **246** into a shape having first width **274** at first end **268** and second width **278** at second end **270,** wherein second width **278** is different than first width **274.** In some illustrative examples, variable cross-section **254** is symmetric.

In some illustrative examples, forming variable cross-section **254** comprises at least partially restraining portions of composite charge **246** to maintain tension **260** in composite charge **246** while driving plurality of actuators **204.**

Driving plurality of actuators **204** at plurality of rates **210** to generate variable cross-section **254** in composite charge **246** comprises rotating forming tool **202** about rotational axis **240** parallel to width **256** of composite charge **246.** By driving plurality of actuators **204** at plurality of rates **210** to generate variable cross-section **254,** forming tool **202** pivots **243** about rotational axis **240.** In some illustrative examples, first end **232** moves farther than second end **234** as forming tool **202** pivots **243.** In these illustrative examples, by pivoting forming tool **202** around rotational axis **240,** first end **232** moves faster than second end **234** of forming tool **202** in forming direction **245.** In some illustrative examples, second end **234** moves farther than first end **232** as forming tool pivots **243.** In these illustrative examples, by pivoting forming tool **202** around rotational axis **240,** second end **234** moves faster than first end **232** of forming tool **202** in forming direction **245.** Pivoting forming tool **202** during forming of composite charge **246** reduces wrinkling during forming. Rotational axis **240** is perpendicular to both longitudinal axis **244** of forming tool **202** and forming direction **245** of movement of forming tool **202.**

In some illustrative examples, charge support **284** comprises cavity **289** for forming composite charge **246.** In some illustrative examples, cavity **289** is a set size. In some illustrative examples, charge support **284** is fixed. In other illustrative examples, cavity **289** of charge support **284** is adjustable.

In some illustrative examples, charge support **284** comprises first half **286** and second half **290** with gap **288** between first half **286** and second half **290.** In some illustrative examples, charge support **284** comprises first half **286** and second half **290,** wherein at least one of first half **286** or second half **290** is configured to move away from the other of first half **286** or second half **290** to enable forming of composite charge **246.**

In some illustrative examples, punch forming system **201** comprises movement system **292** connected to charge support **284** and configured to allow movement of at least one of first half **286** or second half **290** in more than one axis. Movement system **292** can take any desirable form. In some illustrative examples, movement system **292** can comprise one of bearings, wheels, rails, or any other desirable movement component. In some illustrative examples, movement system **292** allows movement along first axis **294** to allow first half **286** and second half **290** to move away from each other. In some illustrative examples, movement system **292** allows movement along second axis **296** to allow different distances between first half **286** and second half **290** at different locations along longitudinal axis **244** of forming tool **202.** In some illustrative examples, movement system **292** allows for first half **286** and second half **290** to "fan" relative to each other.

In some illustrative examples, punch forming system **201** comprises clamping system **282** configured to compress portion **248** of composite charge **246** against portion **236** of forming tool **202** during forming of composite charge **246.** In some illustrative examples, clamping system **282** constrains composite charge **246** in a cap region. In some illustrative examples, portion **248** is a centerline of composite charge **246.** In some illustrative examples, prior to forming variable cross-section **254,** clamping force **283** is applied to compress a portion **248** of composite charge **246** against forming tool **202** prior to driving plurality of actuators **204.**

In some illustrative examples, punch forming system **201** comprises composite charge restraints **280** configured to maintain tension **260** in composite charge **246** during forming of composite charge **246** by applying pressure **281** against composite charge **246** and towards one of either forming tool **202** or charge support **284.** Composite charge restraints **280** take any desirable form. In some illustrative examples, composite charge restraints **280** take the form of at least one of clamps or inflatable bladders.

Composite charge **246** with variable cross-section **254** can be referred to as longitudinal component **250.** In some illustrative examples, longitudinal component **250** takes the form of stringer **252.**

In some illustrative examples, composite charge **246** is trimmed **266** after forming variable cross-section **254.** In some of these illustrative examples, composite charge **246** can be rectangular **262** when composite charge **246** is placed onto charge support **284.**

In some illustrative examples, composite charge **246** is net shape **264** prior to forming. In these illustrative examples, composite charge **246** is not trimmed **266** after forming variable cross-section **254.** Composite charge **246** can be laid up to net shape **264** or trimmed **266** to net shape **264** prior to placing composite charge **246** on charge support **284.**

The illustration of manufacturing environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, in some illustrative examples, plurality of actuators **204** has more than five actuators. In some illustrative examples, forming tool **202** can be segmented. In some illustrative examples, forming tool **202** comprises a plurality of segments, each segment connected to a respective actuator of plurality of actuators **204.**

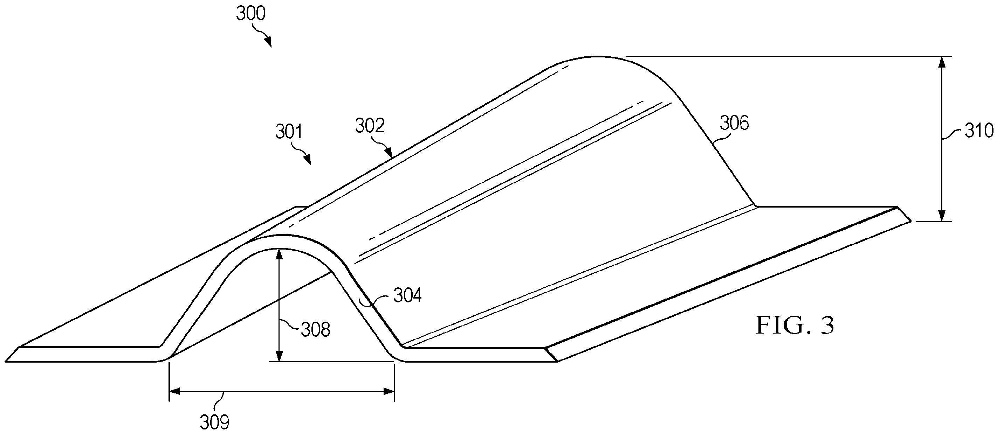

Turning now to **Figure 3****,** an illustration of an isometric view of a longitudinal component that can be manufactured using punch forming is depicted in accordance with an illustrative embodiment. Longitudinal component **301** is a physical implementation of longitudinal component **250** formed from composite charge **246** of **Figure 2****.** In this illustrative example, longitudinal component **301** takes the form of a hat-shaped stringer. Variable cross-section **302** of longitudinal component **301** can be formed using punch forming system **201** of **Figure 2****.**

Variable cross-section **302** has first end **304** and second end **306.** First end **304** has first height **308** and first width **309.** Second end **306** has second height **310** and second width (not visible). In this illustrative example, first height **308** and second height **310** are different. In some illustrative examples, first width **309** and the second width are different. In this illustrative example, second height **310** is greater than first height **308.**

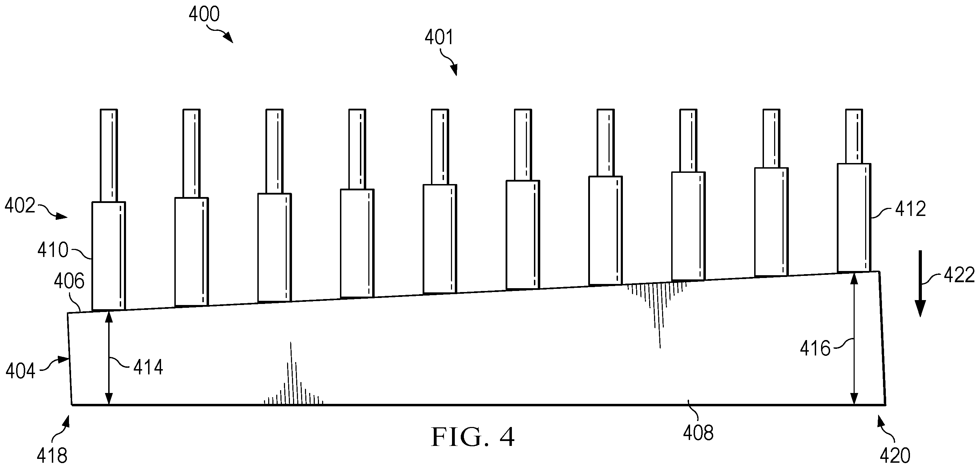

Turning now to **Figure 4****,** an illustration of a side view of a schematic of a forming tool and plurality of actuators for punch forming is depicted in accordance with an illustrative embodiment. Forming tool **404** of a punch forming system is visible in view **400.** Forming tool **404** is a physical implementation of forming tool **202** of **Figure 2****.** Plurality of actuators **402** is a physical implementation of plurality of actuators **204** of **Figure 2****.** Forming tool **404** can be used to form a composite charge into longitudinal component **301** having variable cross-section **302.**

Forming tool **404** has backside **406** and forming surface **408.** Plurality of actuators **402** is connected to backside **406** of forming tool **404.** In this illustrative example, plurality of actuators **402** comprises ten actuators. Plurality of actuators **402** can comprise any desirable quantity of actuators.

In this illustrative example, actuator **410** is positioned farthest at first end **418** of forming tool **404.** In this illustrative example, actuator **412** is positioned farthest at second end **420.** In some illustrative examples, actuator **410** can be referred to as a first actuator and actuator **412** can be referred to as a last actuator.

In this illustrative example, at first end **418,** backside **406** is first distance **414** away from forming surface **408.** In this illustrative example, at second end **420,** backside **406** is second distance **416** away from forming surface **408.** A difference in thickness of forming tool **404** from first end **418** to second end **420** generates a variable cross-section in a composite charge during punch forming.

In view **400,** forming tool **404** is positioned at first orientation **401.** First orientation **401** can be an orientation for forming tool **404** prior to punch forming a composite charge. In first orientation **401,** forming surface **408** is positioned such that a portion of forming surface **408** contacts a portion of a composite charge. In first orientation **401,** forming surface **408** is positioned to contact a composite charge along the whole length of the composite charge. In view **400,** plurality of actuators **402** are positioned such that forming surface **408** is held in a substantially planar position. In view **400,** plurality of actuators **402** is initially extended a plurality of different lengths. In view **400,** some actuators of plurality of actuators **402** are partially extended prior to beginning punch forming. To form a composite charge, forming tool **404** is moved in direction **422.** Direction **422** is towards a composite charge.

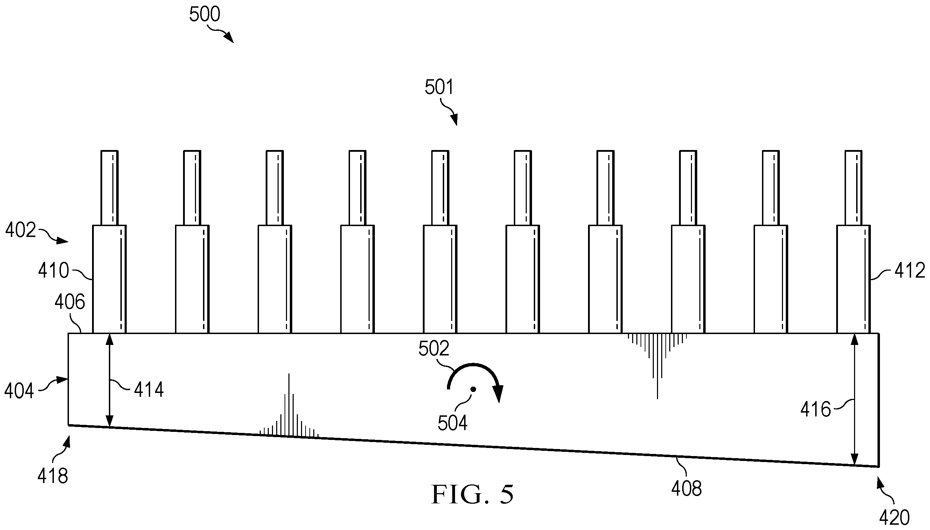

Turning now to **Figure 5****,** an illustration of a side view of a schematic of a forming tool and plurality of actuators for punch forming is depicted in accordance with an illustrative embodiment. In view **500,** forming tool **404** is in second orientation **501.** In some illustrative examples, second orientation **501** is an orientation for forming tool **404** following punch forming a composite charge. Between first orientation **401** and second orientation **501,** plurality of actuators **402** have moved at a plurality of rates. In view **400,** plurality of actuators **402** were extended a plurality of distances. Between view **400** and view **500,** plurality of actuators **402** has been extended a plurality of stroke lengths. In view **500,** plurality of actuators **402** are extended a same amount. Between view **400** and view **500,** plurality of actuators **402** initiated and stopped movement simultaneously. Between view **400** and view **500,** actuator **412** moved faster than actuator **410.**

Between view **400** and view **500,** forming tool **404** has pivoted in direction **502.** By pivoting forming tool **404** in direction **502,** second end **420** moves further than first end **418** in direction **422.** By pivoting forming tool **404** in direction **502,** second end **420** moves faster than first end **418** of forming tool **404.** Pivoting forming tool **404** during forming of a composite charge reduces wrinkling during forming.

In this illustrative example, forming tool **404** is pivoted in direction **502** about rotational axis **504.** Rotational axis **504** extends into and out of the page. Rotational axis **504** is perpendicular to both a longitudinal axis of forming tool **404** and direction **422** of movement of forming tool **404.**

In this illustrative example, plurality of actuators **402** have a same length. In other non-depicted examples, plurality of actuators **402** can have different lengths. In some illustrative examples, each of plurality of actuators **402** with different lengths are fully retracted in view **400** and each of plurality actuators **402** is fully extended in view **500.**

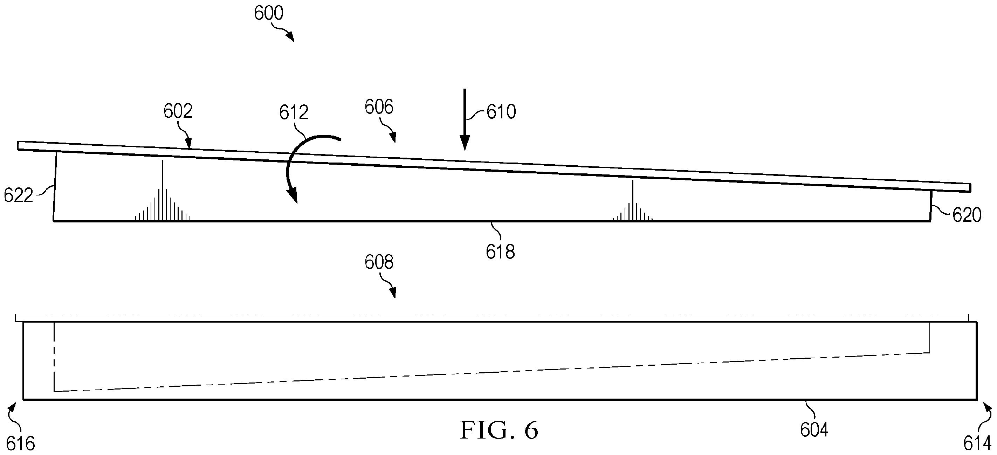

Turning now to **Figure 6****,** an illustration of a side view of a schematic of a forming tool relative to a charge support prior to and following punch forming is depicted in accordance with an illustrative embodiment. Forming tool **602** and charge support **604** can be physical implementations of forming tool **202** and charge support **284** of **Figure 2****.** Forming tool **602** and charge support **604** can be used to form longitudinal component **301** of **Figure 3****.** Forming tool **602** can be the same as forming tool **404** of **Figures 4** and **5****.**

In view **600,** forming tool **602** is depicted in first orientation **606** and second orientation **608** relative to charge support **604.** In first orientation **606,** forming tool **602** is prepared to begin forming a composite charge on charge support **604.** First orientation **606** is depicted elevated above charge support **604.** Prior to beginning forming the composite charge, forming tool **602** is moved in direction **610** to place forming tool **602** in contact with the composite charge in first orientation **606.** In this illustrative example, in first orientation **606** forming tool **602** is positioned such that forming surface **618** has a substantially flat presentation. In first orientation **606,** forming surface **618** of forming tool **602** is parallel to the composite charge. In first orientation **606,** a distance from forming surface **618** of forming tool **602** to charge support **604** is a same distance along the longitudinal axis of charge support **604.** In first orientation **606,** a distance from forming surface **618** of forming tool **602** to charge support **604** is a same distance from first end **614** to second end **616.** In this illustrative example, first end **620** of forming tool **602** is a same distance away from first end **614** of charge support **604** as second end **622** of forming tool **602** from second end **616** of charge support **604.**

In second orientation **608,** forming tool **602** has formed a variable cross-section into a composite charge on charge support **604.** In second orientation **608,** forming surface **618** of forming tool **602** is angled relative to charge support **604.** Between first orientation **606** and second orientation **608,** forming tool **602** has moved in direction **610.** Direction **610** is downward toward charge support **604.** In forming a composite charge forming tool **602** pivots in direction **612.** By pivoting forming tool **602** in direction **612,** second end **622** moves further in direction **610** than first end **620.** By pivoting forming tool **602** in direction **612,** second end **622** moves faster than first end **620** of forming tool **602.** Pivoting forming tool **602** during forming of a composite charge reduces wrinkling during forming.

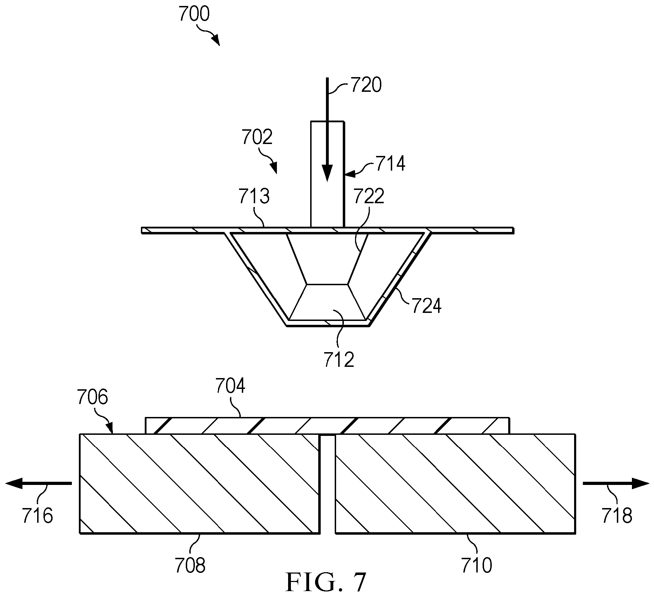

Turning now to **Figure 7****,** an illustration of a front view of a schematic of a forming tool and a charge support prior to punch forming is depicted in accordance with an illustrative embodiment. Forming tool **702** and charge support **706** can be physical implementations of forming tool **202** and charge support **284** of **Figure 2****.** Forming tool **702** and charge support **706** can be used to form longitudinal component **301** of **Figure 3****.** Forming tool **702** can be the same as forming tool **404** of **Figures 4** and **5****.** View **700** can be a front view of forming tool **602** and charge support **604** of **Figure 6****.**

In view **700,** forming tool **702** is positioned above composite charge **704** on charge support **706.** In this illustrative example, charge support **706** comprises first half **708** and second half **710.** In this illustrative example, a gap between first half **708** and second half **710** can change during the forming of composite charge **704.**

At least one of first half **708** or second half **710** is configured to move away from the other of first half **708** or second half **710** to enable forming of composite charge **704.** In this illustrative example, first half **708** is configured to move in direction **716** away from second half **710.** In this illustrative example, second half **710** is configured to move in direction **718** away from first half **708.**

Although not depicted in view **700,** a movement system is connected to charge support **706** to allow movement of at least one of first half **708** or second half **710.** In some illustrative examples, the movement system is configured to allow movement of at least one of first half **708** or second half **710** in more than one axis. By allowing movement in more than one axis, a distance between first half **708** and second half **710** at a first end of charge support **706** can be different than a distance between first half **708** and second half **710** at a second end of charge support **706.**

Plurality of actuators **714** is connected to backside **713** of forming tool **702.** Plurality of actuators **714** is aligned in the longitudinal direction of forming tool **702.** Plurality of actuators **714** is configured to move forming surface **712** in direction **720** towards composite charge **704.** As can be seen in view **700,** forming surface **712** has a variable cross-section. In view **700,** first end **722** has a smaller cross-section than second end **724.**

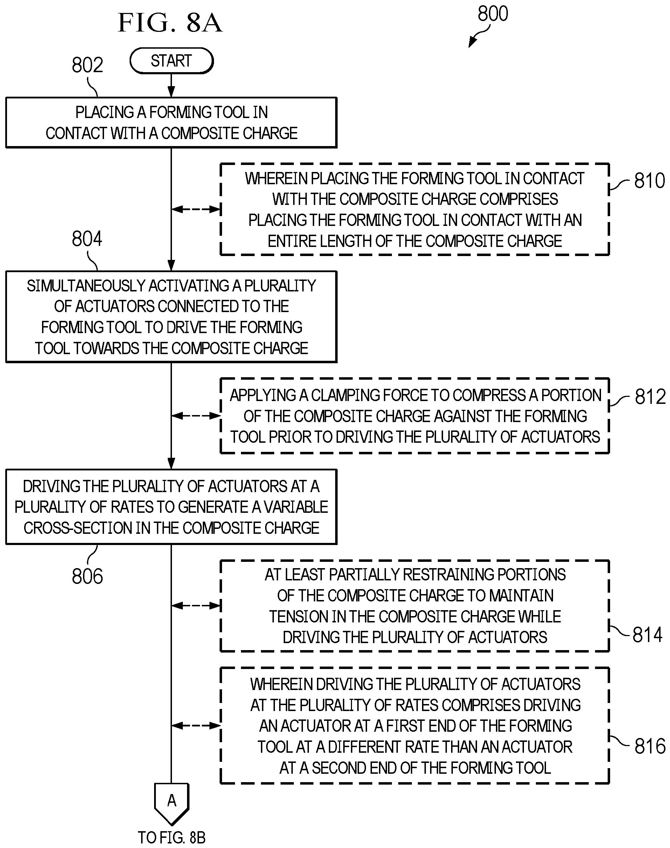

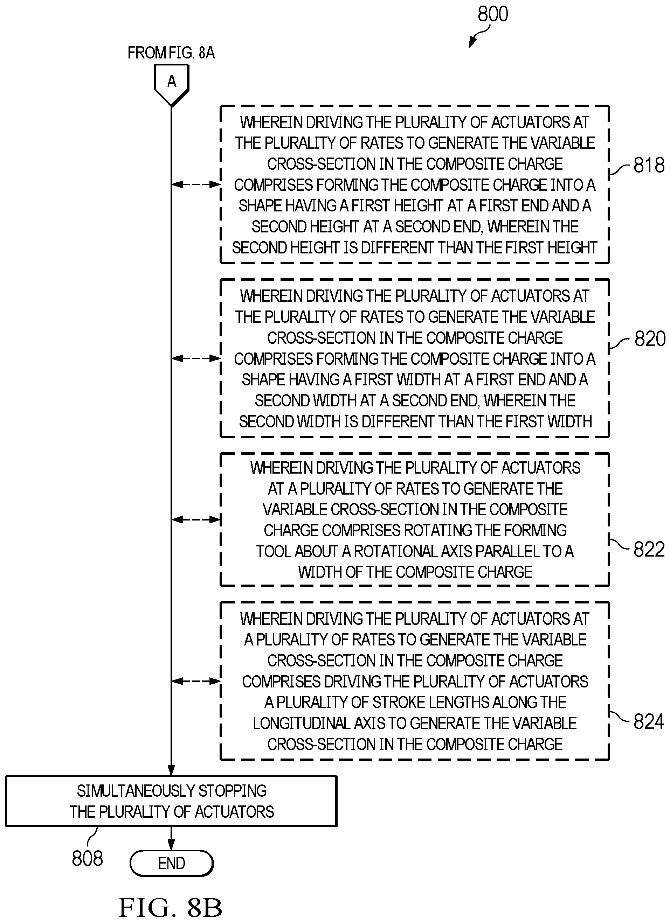

Turning now to **Figures 8A** and **8B****,** a flowchart of a method of punch forming a composite charge is depicted in accordance with an illustrative embodiment. Method **800** can be used to form a composite part of aircraft **100** of **Figure 1****.** Method **800** can be performed using forming tool **202** of **Figure 2****.** Method **800** can be performed on composite charge **246 of** **Figure 2****.** Method **800** can produce longitudinal component **300** of **Figure 3****.** Method **800** can be performed using plurality of actuators **402** and forming tool **404** of **Figures 4** and **5****.** Method **800** can be performed using forming tool **602** of **Figure 6****.** Method **800** can be performed on composite charge **704** using forming tool **702** of **Figure 7****.**

Method **800** places a forming tool in contact with a composite charge (operation **802**). Method **800** simultaneously activates a plurality of actuators connected to the forming tool to drive the forming tool towards the composite charge (operation **804**). Method **800** drives the plurality of actuators at a plurality of rates to generate a variable cross-section in the composite charge (operation **806**). Method **800** simultaneously stops the plurality of actuators (operation **808**). Afterwards, method **800** terminates.

In some illustrative examples, placing the forming tool in contact with the composite charge comprises placing the forming tool in contact with an entire length of the composite charge (operation **810**). In some illustrative examples, placing the forming tool in contact with the composite charge comprises placing the center of the forming tool in contact with a center of the composite charge.

In some illustrative examples, method **800** applies a clamping force to compress a portion of the composite charge against the forming tool prior to driving the plurality of actuators (operation **812**). In some illustrative examples, the clamping force clamps a center of the composite charge to a center of the forming tool. In some illustrative examples, the clamping force can be applied by an inflatable bladder.

In some illustrative examples, method **800** at least partially restrains portions of the composite charge to maintain tension in the composite charge while driving the plurality of actuators (operation **814**). In some illustrative examples, at least partially restraining the portions of the composite charge comprises compressing opposite edges of the composite charge against the forming tool. In some illustrative examples, at least partially restraining the portions of the composite charge comprises compressing opposite edges of the composite charge against a charge support under the composite charge. In some illustrative examples, the composite charge is at least partially restrained by a mechanical clamp. In some illustrative examples, the composite charge is at least partially restrained by an inflatable bladder.

In some illustrative examples, driving the plurality of actuators at the plurality of rates comprises driving an actuator at a first end of the forming tool at a different rate than an actuator at a second end of the forming tool (operation **816**). The end of the forming tool with a larger cross-section is associated with an actuator operated at a faster rate. In some illustrative examples, the first end of the forming too has a larger cross-section and driving the plurality of actuators comprises driving an actuator at a first end of the forming tool at a faster rate than an actuator at a second end of the forming tool.

In some illustrative examples, driving the plurality of actuators at the plurality of rates to generate the variable cross-section in the composite charge comprises forming the composite charge into a shape having a first height at a first end and a second height at a second end, wherein the second height is different than the first height (operation **818**). An actuator forming a larger height into a composite charge will operate at a faster rate than an actuator forming a smaller height into the composite charge. In some illustrative examples, the first height is greater than the second height. In these illustrative examples, the actuator forming the first height into the first end of the composite charge operates at a faster rate than an actuator forming the second height into the second end of the composite charge.

In some illustrative examples, driving the plurality of actuators at the plurality of rates to generate the variable cross-section in the composite charge comprises forming the composite charge into a shape having a first width at a first end and a second width at a second end, wherein the second width is different than the first width (operation **820**). In some illustrative examples, an actuator forming a larger width into a composite charge will operate at a faster rate than an actuator forming a smaller width into the composite charge.

In some illustrative examples, driving the plurality of actuators at a plurality of rates to generate the variable cross-section in the composite charge comprises rotating the forming tool about a rotational axis parallel to a width of the composite charge (operation **822**). In some illustrative examples, rotating the forming tool comprises pivoting the forming tool such that an end of the forming tool with a larger cross-section moves a farther distance than an opposite end of the forming tool with a smaller cross-section. The illustrative examples provide some wrinkle reduction by generating a type of torsion to the charge through the rotation of the forming tool. The torsion is generated by the different rates of the actuators.

In some illustrative examples, the plurality of actuators is distributed along a longitudinal axis of the forming tool. In some illustrative examples, driving the plurality of actuators at a plurality of rates to generate the variable cross-section in the composite charge comprises driving the plurality of actuators a plurality of stroke lengths along the longitudinal axis to generate the variable cross-section in the composite charge (operation **824**).

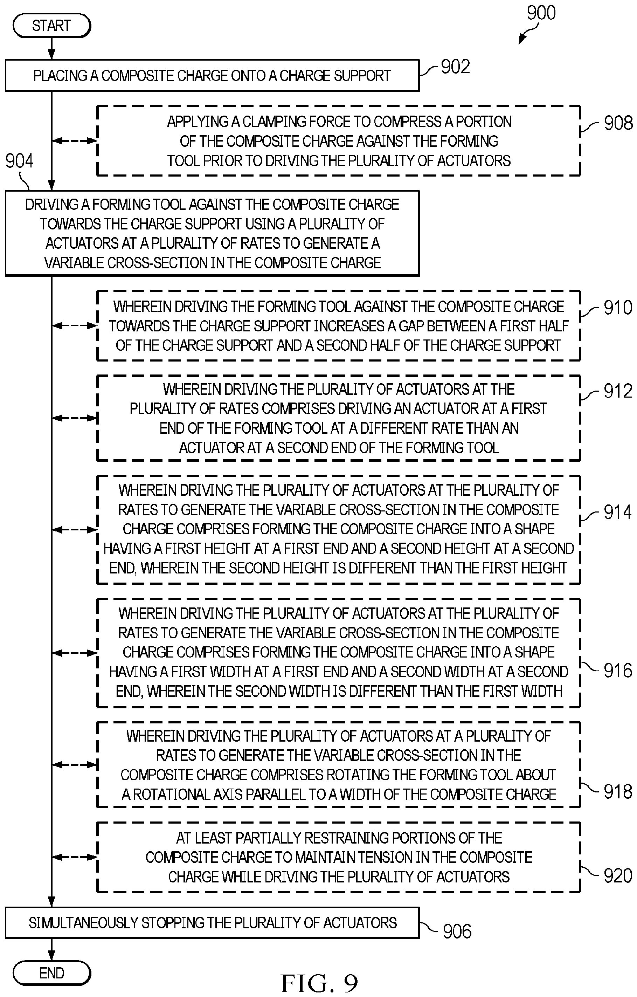

Turning now to **Figure 9****,** a flowchart of a method of punch forming a composite charge is depicted in accordance with an illustrative embodiment. Method **900** can be used to form a composite part of aircraft **100** of **Figure 1****.** Method **900** can be performed using forming tool **202** of **Figure 2****.** Method **900** can be performed on composite charge **246** of **Figure 2****.** Method **900** can produce longitudinal component **300** of **Figure 3****.** Method **900** can be performed using plurality of actuators **402** and forming tool **404** of **Figures 4** and **5****.** Method **900** can be performed using forming tool **602** of **Figure 6****.** Method **900** can be performed on composite charge **704** using forming tool **702** of **Figure 7****.**

Method **900** places a composite charge onto a charge support (operation **902**). Method **900** drives a forming tool against the composite charge towards the charge support using a plurality of actuators at a plurality of rates to generate a variable cross-section in the composite charge (operation **904**). Method **900** simultaneously stops the plurality of actuators (operation **906**). Afterwards, method **900** terminates.

In some illustrative examples, method **900** applies a clamping force to compress a portion of the composite charge against the forming tool prior to driving the plurality of actuators (operation **908**).

In some illustrative examples, driving the forming tool against the composite charge towards the charge support increases a gap between a first half of the charge support and a second half of the charge support (operation **910**).

In some illustrative examples, driving the plurality of actuators at the plurality of rates comprises driving an actuator at a first end of the forming tool at a different rate than an actuator at a second end of the forming tool (operation **912**).

In some illustrative examples, driving the plurality of actuators at the plurality of rates to generate the variable cross-section in the composite charge comprises forming the composite charge into a shape having a first height at a first end and a second height at a second end, wherein the second height is different than the first height (operation **914**).

In some illustrative examples, driving the plurality of actuators at the plurality of rates to generate the variable cross-section in the composite charge comprises forming the composite charge into a shape having a first width at a first end and a second width at a second end, wherein the second width is different than the first width (operation **916**).

In some illustrative examples, driving the plurality of actuators at a plurality of rates to generate the variable cross-section in the composite charge comprises rotating the forming tool about a rotational axis parallel to a width of the composite charge (operation **918**).

In some illustrative examples, method **900** at least partially restrains portions of the composite charge to maintain tension in the composite charge while driving the plurality of actuators (operation **920**). In some illustrative examples, at least partially restraining the portions of the composite charge comprises compressing opposite edges of the composite charge against the forming tool. In some illustrative examples, at least partially restraining the portions of the composite charge comprises compressing opposite edges of the composite charge against a charge support under the composite charge. In some illustrative examples, the composite charge is at least partially restrained by a mechanical clamp. In some illustrative examples, the composite charge is at least partially restrained by an inflatable bladder.

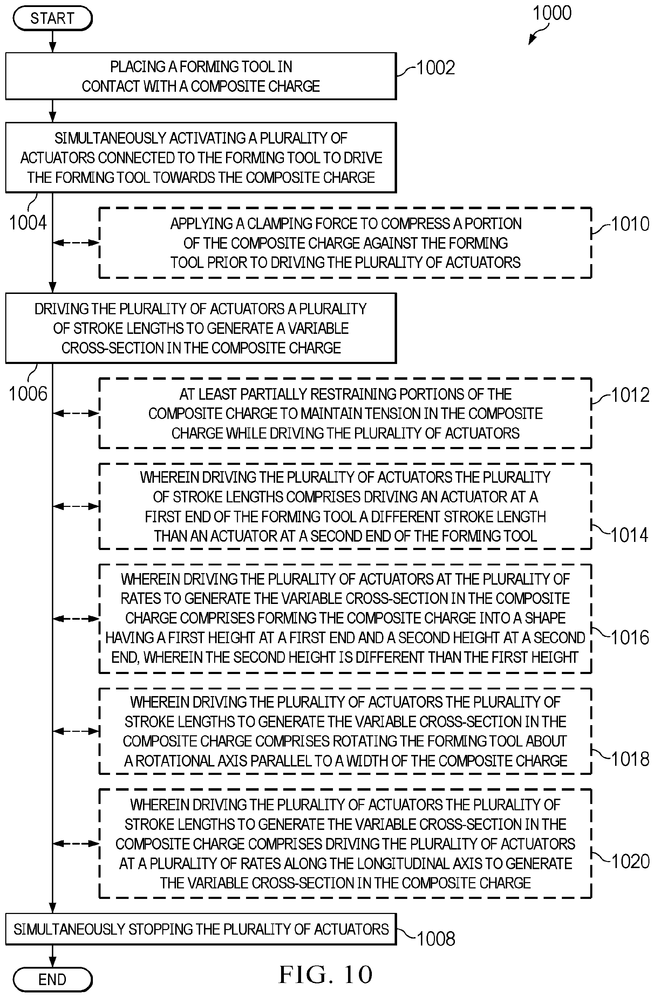

Turning now to **Figure 10****,** a flowchart of a method of punch forming a composite charge is depicted in accordance with an illustrative embodiment. Method **1000** can be used to form a composite part of aircraft **100** of **Figure 1****.** Method **1000** can be performed using forming tool **202** of **Figure 2****.** Method **1000** can be performed on composite charge **246** of **Figure 2****.** Method **1000** can produce longitudinal component **300** of **Figure 3****.** Method **1000** can be performed using plurality of actuators **402** and forming tool **404** of **Figures 4** and **5****.** Method **1000** can be performed using forming tool **602** of **Figure 6****.** Method **1000** can be performed on composite charge **704** using forming tool **702** of **Figure 7****.**

Method **1000** places a forming tool in contact with a composite charge (operation **1002**). Method **1000** simultaneously activates a plurality of actuators connected to the forming tool to drive the forming tool towards the composite charge (operation **1004**). Method **1000** drives the plurality of actuators a plurality of stroke lengths to generate a variable cross-section in the composite charge (operation **1006**). Method **1000** simultaneously stopping the plurality of actuators (operation **1008**). Afterwards, method **1000** terminates.

In some illustrative examples, method **1000** applies a clamping force to compress a portion of the composite charge against the forming tool prior to driving the plurality of actuators (operation **1010**). In some illustrative examples, at least partially restraining portions of the composite charge to maintain tension in the composite charge while driving the plurality of actuators (operation **1012**).

In some illustrative examples, method **1000** drives the plurality of actuators the plurality of stroke lengths comprises driving an actuator at a first end of the forming tool a different stroke length than an actuator at a second end of the forming tool (operation **1014).** In some illustrative examples, driving the plurality of actuators the plurality of stroke lengths to generate the variable cross-section in the composite charge comprises forming the composite charge into a shape having a first height at a first end and a second height at a second end, wherein the second height is different than the first height (operation **1016**).

In some illustrative examples, driving the plurality of actuators the plurality of stroke lengths to generate the variable cross-section in the composite charge comprises rotating the forming tool about a rotational axis parallel to a width of the composite charge (operation **1018**).

In some illustrative examples, the plurality of actuators is distributed along a longitudinal axis of the forming tool. In some illustrative examples, driving the plurality of actuators the plurality of stroke lengths to generate the variable cross-section in the composite charge comprises driving the plurality of actuators at a plurality of rates along the longitudinal axis to generate the variable cross-section in the composite charge (operation **1020**).

As used herein, the phrase "at least one of," when used with a list of items, means different combinations of one or more of the listed items may be used and only one of each item in the list may be needed. For example, "at least one of item A, item B, or item C," may include, without limitation, item A, item A and item B, or item B. This example also may include item A, item B, and item C, or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **810** through operation **824** may be optional. For example, operation **908** through operation **920** may be optional. As another example, operation **1010** through operation **1020** may be optional.

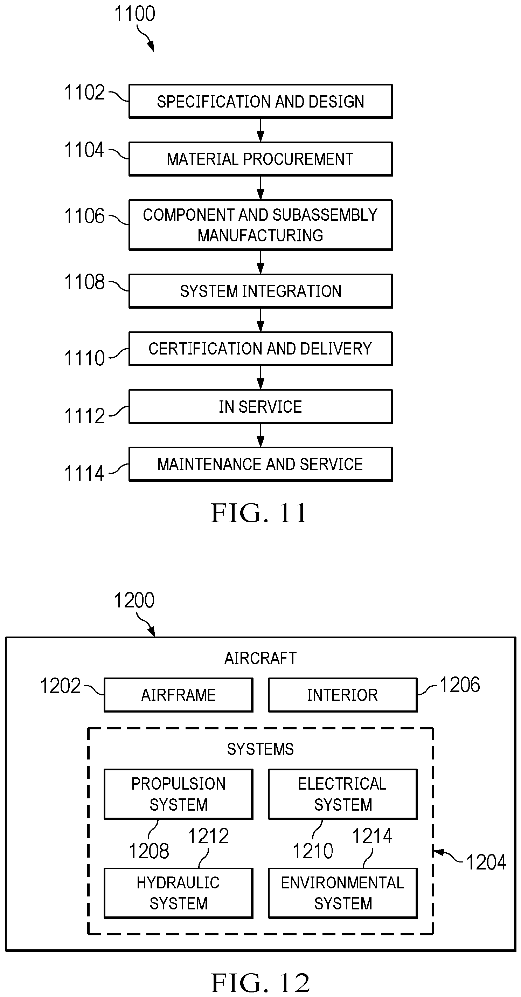

Illustrative embodiments of the present disclosure may be described in the context of aircraft manufacturing and service method **1100** as shown in **Figure 11** and aircraft **1200** as shown in **Figure 12****.** Turning first to **Figure 11****,** an illustration of an aircraft manufacturing and service method in a form of a block diagram is depicted in accordance with an illustrative embodiment. During pre-production, aircraft manufacturing and service method **1100** may include specification and design **1102** of aircraft **1200** in **Figure 12** and material procurement **1104.**

During production, component and subassembly manufacturing **1106** and system integration **1108** of aircraft **1200** takes place. Thereafter, aircraft **1200** may go through certification and delivery **1110** in order to be placed in service **1112.** While in service **1112** by a customer, aircraft **1200** is scheduled for routine maintenance and service **1114,** which may include modification, reconfiguration, refurbishment, or other maintenance and service.

Each of the processes of aircraft manufacturing and service method **1100** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 12****,** an illustration of an aircraft in a form of a block diagram is depicted in which an illustrative embodiment may be implemented. In this example, aircraft **1200** is produced by aircraft manufacturing and service method **1100** of **Figure 11** and may include airframe **1202** with plurality of systems **1204** and interior **1206.** Examples of systems **1204** include one or more of propulsion system **1208,** electrical system **1210,** hydraulic system **1212,** and environmental system **1214.** Any number of other systems may be included.

Apparatuses and methods embodied herein may be employed during at least one of the stages of aircraft manufacturing and service method **1100.** One or more illustrative embodiments may be manufactured or used during at least one of component and subassembly manufacturing **1106,** system integration **1108,** in service **1112,** or maintenance and service **1114** of **Figure 11****.**

Further, the current disclosure comprises embodiments according to the following clauses:
Clause 1. A method of punch forming a composite charge comprising:
   placing a forming tool in contact with a composite charge;
   simultaneously activating a plurality of actuators connected to the forming tool to drive the forming tool towards the composite charge;
   driving the plurality of actuators at a plurality of rates to generate a variable cross-section in the composite charge; and
   simultaneously stopping the plurality of actuators.
Clause 2. The method of clause 1, wherein driving the plurality of actuators at the plurality of rates comprises driving an actuator at a first end of the forming tool at a different rate than an actuator at a second end of the forming tool.
Clause 3. The method of clause 1 or 2, wherein driving the plurality of actuators at the plurality of rates to generate the variable cross-section in the composite charge comprises forming the composite charge into a shape having a first height at a first end and a second height at a second end, wherein the second height is different than the first height.
Clause 4. The method of any of clauses 1 to 3, wherein driving the plurality of actuators at the plurality of rates to generate the variable cross-section in the composite charge comprises forming the composite charge into a shape having a first width at a first end and a second width at a second end, wherein the second width is different than the first width.
Clause 5. The method of any of clauses 1 to 4, wherein placing the forming tool in contact with the composite charge comprises placing the forming tool in contact with an entire length of the composite charge.
Clause 6. The method of any of clauses 1 to 5 further comprising:
   applying a clamping force to compress a portion of the composite charge against the forming tool prior to driving the plurality of actuators.
Clause 7. The method of any of clauses 1 to 6 further comprising:
   at least partially restraining portions of the composite charge to maintain tension in the composite charge while driving the plurality of actuators.
Clause 8. The method of any of clauses 1 to 7, wherein driving the plurality of actuators at a plurality of rates to generate the variable cross-section in the composite charge comprises rotating the forming tool about a rotational axis parallel to a width of the composite charge.
Clause 9. The method of any of clauses 1 to 8, wherein the plurality of actuators is distributed along a longitudinal axis of the forming tool, and wherein driving the plurality of actuators at a plurality of rates to generate the variable cross-section in the composite charge comprises driving the plurality of actuators a plurality of stroke lengths along the longitudinal axis to generate the variable cross-section in the composite charge.
Clause 10. A method of punch forming a composite charge comprising:
   placing a forming tool in contact with a composite charge;
   simultaneously activating a plurality of actuators connected to the forming tool to drive the forming tool towards the composite charge;
   driving the plurality of actuators a plurality of stroke lengths to generate a variable cross-section in the composite charge; and
   simultaneously stopping the plurality of actuators.
Clause 11. The method of clause 10 wherein driving the plurality of actuators the plurality of stroke lengths comprises driving an actuator at a first end of the forming tool a different stroke length than an actuator at a second end of the forming tool.
Clause 12. The method of clause 10 or 11, wherein driving the plurality of actuators the plurality of stroke lengths to generate the variable cross-section in the composite charge comprises forming the composite charge into a shape having a first height at a first end and a second height at a second end, wherein the second height is different than the first height.
Clause 13. The method of any of clauses 10 to 12 further comprising:
   applying a clamping force to compress a portion of the composite charge against the forming tool prior to driving the plurality of actuators.
Clause 14. The method of any of clauses 10 to 13 further comprising:
   at least partially restraining portions of the composite charge to maintain tension in the composite charge while driving the plurality of actuators.
Clause 15. The method of any of clauses 10 to 14, wherein driving the plurality of actuators the plurality of stroke lengths to generate the variable cross-section in the composite charge comprises rotating the forming tool about a rotational axis parallel to a width of the composite charge .
Clause 16. The method of any of clauses 10 to 15, wherein the plurality of actuators is distributed along a longitudinal axis of the forming tool, and wherein driving the plurality of actuators the plurality of stroke lengths to generate the variable cross-section in the composite charge comprises driving the plurality of actuators at a plurality of rates along the longitudinal axis to generate the variable cross-section in the composite charge.
Clause 17. A punch forming system for a variable cross-section comprising:
   a charge support configured to support a composite charge during forming of the composite charge;
   a forming tool positioned over the charge support, the forming tool comprising a forming surface and a backside; and
   a plurality of actuators connected to the backside of the forming tool and configured to operate at a plurality of rates to form a composite charge between the forming surface and the charge support.
Clause 18. The punch forming system of clause 17, wherein the charge support comprises a first half and second half, wherein at least one of the first half or the second half is configured to move away from the other of the first half or the second half to enable forming of a composite charge.
Clause 19. The punch forming system of clause 18 further comprising:
   a movement system connected to the charge support and configured to allow movement of at least one of the first half or the second half in more than one axis.
Clause 20. The punch forming system of any of clauses 17 to 19 further comprising:
   a clamping system configured to compress a portion of the composite charge against a portion of the forming tool during forming of the composite charge.
Clause 21. The punch forming system of any of clauses 17 to 20 further comprising:
   composite charge restraints configured to maintain tension in a composite charge during forming of the composite charge by applying pressure against the composite charge and towards one of either the forming tool or the charge support.
Clause 22. A method of punch forming a composite charge comprising:
   placing a composite charge onto a charge support;
   driving a forming tool against the composite charge towards the charge support using a plurality of actuators at a plurality of rates to generate a variable cross-section in the composite charge; and
   simultaneously stopping the plurality of actuators.
Clause 23. The method of clause 22, wherein driving the forming tool against the composite charge towards the charge support increases a gap between a first half of the charge support and a second half of the charge support.
Clause 24. The method of clause 22 or 23, wherein driving the plurality of actuators at the plurality of rates comprises driving an actuator at a first end of the forming tool at a different rate than an actuator at a second end of the forming tool.
Clause 25. The method of any of clauses 22 to 24, wherein driving the plurality of actuators at the plurality of rates to generate the variable cross-section in the composite charge comprises forming the composite charge into a shape having a first height at a first end and a second height at a second end, wherein the second height is different than the first height.
Clause 26. The method of any of clauses 22 to 25, wherein driving the plurality of actuators at the plurality of rates to generate the variable cross-section in the composite charge comprises forming the composite charge into a shape having a first width at a first end and a second width at a second end, wherein the second width is different than the first width.
Clause 27. The method of any of clauses 22 to 26, wherein driving the plurality of actuators at a plurality of rates to generate the variable cross-section in the composite charge comprises rotating the forming tool about a rotational axis parallel to a width of the composite charge.
Clause 28. The method of any of clauses 22 to 27 further comprising:
   applying a clamping force to compress a portion of the composite charge against the forming tool prior to driving the plurality of actuators.
Clause 29. The method any of clauses 22 to 28 further comprising:
   at least partially restraining portions of the composite charge to maintain tension in the composite charge while driving the plurality of actuators.

The illustrative examples provide methods and systems for punch forming longitudinal components with a tapered cross-section. The illustrative examples provide methods of punch forming taper cross-section composite stringers. The illustrative examples use variable rate actuators to drive a forming die and end the stroke of each actuator at the same time.

The illustrative examples place a composite charge into a punch former. The composite charge can be a net shape or can have a different shape that will result in a manufacturing excess. The illustrative examples use variable rate forming actuators to push the forming die down so that all portions of the face of the forming die stop at the same time. The actuators start at the same time and end at the same time, but cover different distances. The illustrative examples provide some wrinkle reduction by generating a type of torsion to the charge. The torsion is generated by the different rates of the actuators.

The methods and system of the illustrative examples can be used on longitudinal components with a twist, a curvature, or a joggle. Determine each actuator position and speed needed to end all of the actuator strokes at the same time.

In some illustrative examples, a number of release layers are placed on a charge support. The composite charge is placed on top of the number of release layers. The composite charge is aligned on the charge support to ensure the composite charge is centered. In some illustrative examples, a number of release layers is placed on top of the composite charge.

In some illustrative examples, the composite charge can be heated prior to punch forming. The forming die is lowered until the forming surface contacts the composite charge. In some illustrative examples, a series of inflatable bladders are present between the forming tool and the charge support. In some illustrative examples, the inflatable bladders are inflated to apply compression to the composite charge to clamp the composite charge and maintain tension during forming.

The composite charge is formed at variable rate until completion. In some illustrative examples, inflated bladders within the assembly can relieve pressure build-up during the forming. The composite charge is held for a rest time. After a rest time, the formed composite charge is removed from the assembly.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method (800; 1000) of punch forming a composite charge (246, 704) comprising:
placing (802; 1002) a forming tool (202, 404, 602, 702) in contact with a composite charge (246, 704);
simultaneously activating (804; 1004) a plurality of actuators (204, 402, 714) connected to the forming tool (202, 404, 602, 702) to drive the forming tool (202, 404, 602, 702) towards the composite charge (246, 704);
driving (806; 1006) the plurality of actuators (204, 402, 714) at a plurality of rates (210), or a plurality of stroke lengths (211), to generate a variable cross-section (254) in the composite charge (246, 704); and
simultaneously stopping (808; 1008) the plurality of actuators (204, 402, 714).

2. The method (800; 1000) of claim 1, wherein (816; 1014) driving the plurality of actuators (204, 402, 714) at the plurality of rates (210), or the plurality of strike lengths (211), comprises driving an actuator (228, 410) at a first end (232, 418) of the forming tool (202, 404, 602, 702) at a different rate (230) than an actuator (212, 412) at a second end (234, 420) of the forming tool (202, 404, 602, 702).

3. The method (800; 1000) of claim 1 or 2, wherein (818; 1016) driving the plurality of actuators (204, 402, 714) at the plurality of rates (210), or the plurality of strike lengths (211), to generate the variable cross-section (254) in the composite charge (246, 704) comprises forming the composite charge (246, 704) into a shape having a first height (272, 308) at a first end (268, 304) and a second height (276, 310) at a second end (270, 306), wherein the second height (276, 310) is different than the first height (272, 308).

4. The method (800) of any of claims 1 to 3, wherein (820) driving the plurality of actuators (204, 402, 714) at the plurality of rates (210) to generate the variable cross-section (254) in the composite charge (246, 704) comprises forming the composite charge (246, 704) into a shape having a first width (274, 309) at a first end (268, 304) and a second width (278) at a second end (270, 306), wherein the second width (278) is different than the first width (274, 309).

5. The method (800) of any of claims 1 to 4, wherein (810) placing the forming tool (202, 404, 602, 702) in contact with the composite charge (246, 704) comprises placing the forming tool (202, 404, 602, 702) in contact with an entire length (258) of the composite charge (246, 704) .

6. The method (800; 1000) of any of claims 1 to 5 further comprising:
applying (812:; 1010) a clamping force (283) to compress a portion (248) of the composite charge (246, 704) against the forming tool (202, 404, 602, 702) prior to driving the plurality of actuators (204, 402, 714).

7. The method (800; 1000) of any of claims 1 to 6 further comprising:
at least partially restraining (814; 1012) portions of the composite charge (246, 704) to maintain tension (260) in the composite charge (246, 704) while driving the plurality of actuators (204, 402, 714).

8. The method (800; 1000) of any of claims 1 to 7, wherein (822; 1018) driving the plurality of actuators (204, 402, 714) at a plurality of rates (210), or the plurality of strike lengths (211), to generate the variable cross-section (254) in the composite charge (246, 704) comprises rotating the forming tool (202, 404, 602, 702) about a rotational axis (240, 504) parallel to a width (256) of the composite charge (246, 704).

9. The method (800; 1000) of any of claims 1 to 8, wherein the plurality of actuators (204, 402, 714) is distributed along a longitudinal axis (244) of the forming tool (202, 404, 602, 702), and wherein (824; 1020) driving the plurality of actuators (204, 402, 714) at a plurality of rates (210), or the plurality of strike lengths (211), to generate the variable cross-section (254) in the composite charge (246, 704) comprises driving the plurality of actuators (204, 402, 714) a plurality of stroke lengths (211), or at a plurality or rates (210), along the longitudinal axis (244) to generate the variable cross-section (254) in the composite charge (246, 704).

10. A punch forming system (201, 282) for a variable cross-section (254) comprising:
a charge support (284, 604, 706) configured to support a composite charge (246, 704) during forming of the composite charge (246, 704);
a forming tool (202, 404, 602, 702) positioned over the charge support (284, 604, 706), the forming tool (202, 404, 602, 702) comprising a forming surface (208, 408, 618, 712) and a backside (206, 406, 713); and
a plurality of actuators (204, 402, 714) connected to the backside (206, 406, 713) of the forming tool (202, 404, 602, 702) and configured to operate at a plurality of rates (210) to form a composite charge (246, 704) between the forming surface (208, 408, 618, 712) and the charge support (284, 604, 706).

11. The punch forming system (201, 282) of claim 10, wherein the charge support (284, 604, 706) comprises a first half (286, 708) and second half (290, 710), wherein at least one of the first half (286, 708) or the second half (290, 710) is configured to move away from the other of the first half (286, 708) or the second half (290, 710) to enable forming of a composite charge (246, 704).

12. The punch forming system (201, 282) of claim 11 further comprising:
a movement system (201, 282) (292) connected to the charge support (284, 604, 706) and configured to allow movement of at least one of the first half (286, 708) or the second half (290, 710) in more than one axis.

13. The punch forming system (201, 282) of any of claims 10 to 12 further comprising:
a clamping system (201, 282) configured to compress a portion (248) of the composite charge (246, 704) against a portion (236, 248) of the forming tool (202, 404, 602, 702) during forming of the composite charge (246, 704).

14. The punch forming system (201, 282) of any of claims 10 to 13 further comprising:
composite charge (246, 704) restraints configured to maintain tension (260) in a composite charge (246, 704) during forming of the composite charge (246, 704) by applying pressure (281) against the composite charge (246, 704) and towards one of either the forming tool (202, 404, 602, 702) or the charge support (284, 604, 706) .

15. A method (900) of punch forming a composite charge (246, 704) comprising:
placing (902) a composite charge (246, 704) onto a charge support (284, 604, 706);
driving (904) a forming tool (202, 404, 602, 702) against the composite charge (246, 704) towards the charge support (284, 604, 706) using a plurality of actuators (204, 402, 714) at a plurality of rates (210) to generate a variable cross-section (254) in the composite charge (246, 704); and
simultaneously (906) stopping the plurality of actuators (204, 402, 714).
